# EUROPEAN PATENT APPLICATION

(11) **EP 4 498 142 A1**
(43) Date of publication of application: **29.01.2025**
(21) Application number: 24185639.2
(22) Date of filing: 01.07.2024
(51) Int. Cl.: G02B 6/44

(54) **DUAL METAL CONDUCTOR UNDERSEA CABLE**

(30) Priority: 25.07.2023 US 202363528819 P; 26.01.2024 US 202418423771
(71) Applicant: SubCom, LLC, Eatontown, NJ 07724 (US)
(72) Inventor: Spalding, Marsha Ann, Eatontown, 07724 (US); Mohs, Georg Heinrich, Eatontown, 07724 (US); Paraiso, Geraldine, Eatontown, 07724 (US)
(74) Representative: Arnold & Siedsma

(57) **Abstract**

Disclosed is a cable with dual metal conductor structure. In some embodiments, an optical cable includes hollow buffer tube having a plurality of optical fibers therein, and a first plurality of layered strength members surrounding the hollow buffer tube. The optical cable may further include a conductor surrounding the first plurality of layered strength members, wherein the conductor includes a first metal layer surrounded by a second metal layer, and an outer insulating jacket surrounding the conductor.

## Description

### Discussion of Related Art

Any submarine cable that is intended to be used in optical communication system with repeaters (i.e., undersea bodies that house optical amplifiers and network power supplies) has an electrical conductor to carry power from the shore to these submerged repeaters and to other electro-optical undersea bodies. This cable conductor is insulated from the sea water ground by a layer of extruded insulation, typically polyethylene. The conductor layer should have sufficiently low electrical resistance to minimize resistive power dissipation and ensure that sufficient power can be delivered to the network power supply circuitry of the optical amplifiers within the undersea bodies. Having cable with low electrical resistance becomes increasingly important as capacity demands grow and optical path counts increase, which in turn increases the number of power-consuming optical amplifiers.

Historically, undersea cables have utilized pure copper as the material for power conductors in order to reduce resistive power dissipation. Copper can be readily welded into a hermetic tube, protecting the underlying fibers and steel strength wires from moisture and hydrogen. However, copper is costly as a material, and welding thicker layers of copper could result in slower cable manufacturing rates and thus added expense during the cable manufacturing process. Further, the additional weight of the copper conductor can limit the depth/handling capabilities of the cable structure.

It is with respect to these and other drawbacks of the prior art that the present disclosure is provided.

### Summary of the Disclosure

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

In one approach, an optical cable may include a hollow buffer tube having a plurality of optical fibers therein, a first plurality of layered strength members surrounding the hollow buffer tube, a conductor surrounding the first plurality of layered strength members, wherein the conductor comprises a first metal layer surrounded by a second metal layer, and an insulative outer jacket surrounding the conductor.

In another approach, a system may include set of local power feed equipment stations, and an optical cable extending between the set of local power feed equipment stations. The optical cable may include a hollow buffer tube having a plurality of optical fibers therein, a first plurality of layered strength members surrounding the hollow buffer tube, a conductor surrounding the first plurality of layered strength members, wherein the conductor comprises a first metal layer surrounded by a second metal layer, and an insulative outer jacket surrounding the conductor.

In still yet another approach, a method of forming an optical cable, may include providing a hollow buffer tube around a plurality of optical fibers, forming a first plurality of layered strength members around the hollow buffer tube, and forming a conductor around the first plurality of layered strength members. The conductor may include a first metal layer wrapped around the first plurality of layered strength members, and a second metal layer wrapped around the first metal layer. The method may further include forming an insulative outer jacket around the conductor.

### Brief Description of the Drawings

By way of example, embodiments of the disclosure will now be described, with reference to the accompanying drawings, in which
FIG. 1 illustrates an example optical communication system according to embodiments of the present disclosure;
FIG. 2 illustrates an exemplary undersea cable according to embodiments of the present disclosure;
FIG. 3 is a graph illustrating conductor material percentage vs. conductor material cost and cable weight according to embodiments of the present disclosure; and
FIG. 4 is a graph illustrating conductor Direct Current Resistance vs. conductor material cost according to embodiments of the present disclosure.

Furthermore, certain elements in some of the figures may be omitted, or illustrated not-to-scale, for illustrative clarity. The cross-sectional views may be in the form of "slices", or "near-sighted" cross-sectional views, omitting certain background lines otherwise visible in a "true" cross-sectional view, for illustrative clarity. Furthermore, for clarity, some reference numbers may be omitted in certain drawings.

### Description of Embodiments

The present disclosure will now be described more fully hereinafter with reference to the accompanying drawings, in which preferred embodiments of the invention are shown. This disclosure, however, may be embodied in many different forms and should not be construed as limited to the embodiments set forth herein. Rather, these embodiments are provided so that this disclosure will be thorough and complete, and will fully convey the scope of the invention to those skilled in the art. In the drawings, like numbers refer to like elements throughout.

The present disclosure is directed to at least an improved undersea optical fiber communications cable having a dual metal conductor. The prior art approaches described above lead to a cost-inefficient solution and to heavier cables that are more difficult to handle at deep ocean depths. Cable with a copper conductor and low resistance is expensive. Cable with pure aluminum conductor may be difficult to manufacture. To address the deficiencies of the prior art, embodiments of the present disclosure are directed to a cable structure with a dual metal conductor, wherein the inner conductor layer is aluminum and the outer conductor layer is copper. More specifically, the aluminum is a layer of aluminum tape formed around steel strength wires of the cable, the aluminum layer being sufficiently thick to provide reduced electrical resistance. The aluminum layer is surrounded by a relatively thin copper tape, which is wrapped and welded longitudinally, forming a hermetically sealed, conductive cable vault. The copper and aluminum layers together lock the steel wires in place.

The cable of the present disclosure provides at least the following advantages. First, the proposed cable provides lower material cost for the same electrical resistance. Although the raw material cost ratio between copper and aluminum fluctuates depending on market price, copper costs per unit weight may be approximately 2-5 times as much as aluminum. By using a combination of copper and aluminum in the conductor, the same reduction in cable electrical resistance can be achieved with a lower overall conductor material cost.

Second, the proposed cable provides better handling characteristics for the same electrical resistance. Aluminum is approximately 70% lighter than copper. By using a combination of copper and aluminum in the conductor, a cable with the same electrical resistance and lower cable weight in water can be achieved. Weight in water vs. tensile strength is an important characteristic for cable handling operations in deep ocean depths.

Third, the proposed cable improves bending stiffness over an all-aluminum conductor design.

Fourth, the proposed cable improves manufacturability for the same electrical resistance. Welding only the copper enables the selection of the copper thickness for high manufacturing process capability.

Fifth, in the proposed cable, aluminum tape is provided over strength members, but not welded, followed by the copper, which may be welded. As a result, throughput is increased since welding thick conductor metal is not necessary.

Sixth, the proposed cable provides sufficient fiber protection from hydrogen aging as a result of the hermetically welded copper layer.

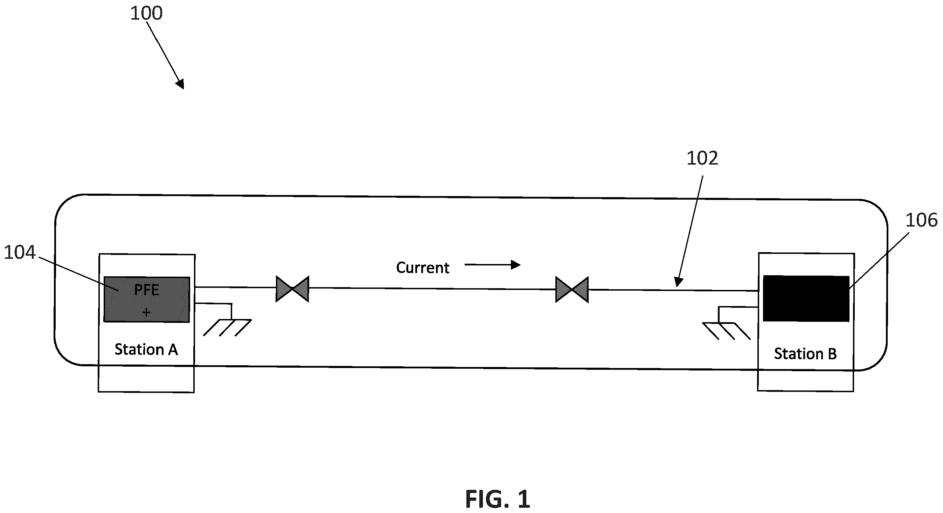

Turning to the figures, **FIG. 1** illustrates one example optical communication system (hereafter "system") 100 in accordance with an embodiment of the present disclosure. The system 100 is shown in a highly simplified form for ease of description. As shown, the system 100 includes a dual-end submarine fiber optic cable (hereinafter "cable") 102 powered by a first local power feed equipment (PFE) 104 and a second PFE 106. The PFEs 104 and 106 may be located at opposite cable landing stations, (e.g., Station A and Station B). Each of the PFEs 104, 106 may be configured to supply, for example, up to 23 kW. Embodiments herein are not limited to any particular power limits, however.

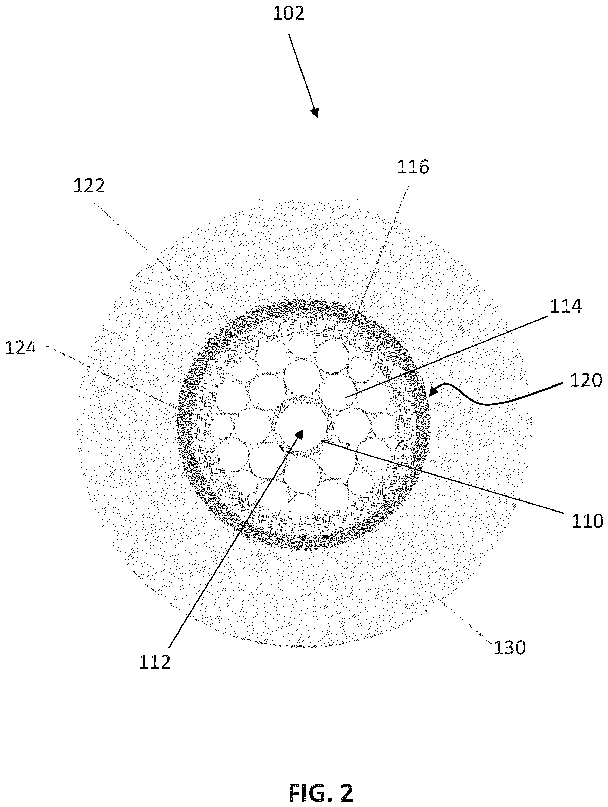

**FIG. 2** illustrates a cross sectional view of an example cable, such as the submarine fiber optic cable 102 shown in **FIG. 1****.** As shown, a tube 110 may enclose or include a plurality of optical fibers 112 therein. The tube 110 may be a single, centrally located gel-filled buffer tube made from plastic material or welded metal. As further shown, a first layer 114 and a second layer 116 of strength members may be wound around the tube 110. For example, the strength members may have a circular cross-section and each layer of the strength members may be arranged in a close-packed configuration, e.g., the inner, first layer 114 may comprise eight (8) strength members in which adjacent strength members are in contact with one another. Similarly, the outer, second layer 116 may comprise sixteen (16) strength members in which adjacent members are in contact with one another. Other numbers of strength members, for example 10 and 20 for first and second layers, respectively, are also possible in alternative embodiments.

As further shown, a conductor 120 may surround the first and second layers 114, 116 of strength members and may serve as both an electrical conductor and a hermetic barrier. In some embodiments, the conductor 120 may include a first layer 122 surrounded by a second layer 124. More specifically, the first layer 122 may be an aluminum tape wrapped helically or longitudinally along the second layers 116 of strength members, while the second layer 124 may be a copper tape wrapped longitudinally around the first layer 122. Other metal materials are also possible. As demonstrated, the first and second layers 122, 124 may be in direct physical and electrical contact with one another. This dual metal conductor structure provides cable 102 with low resistance and a similar size to existing cable structures. Further, this dual metal conductor cable structure provides hermetic protection from fiber hydrogen aging once the second layer 124 is welded.

In the embodiment shown, the volume of the first layer 122 and the second layer 124 are approximately the same while the radial thickness of the first layer 122 is slightly larger than a radial thickness of the second layer 124. However, the relative thicknesses between the first and second layers 122, 124 may vary in other embodiments. In still other embodiments, the radial thicknesses of the first and second layers 122, 124 may be approximately the same or may be quite different. During assembly, the aluminum first layer 122 is wrapped over the first and second layers 114, 116 of strength members, but not welded. However, the copper, second layer 124 may be wrapped over the first layer 122 and then welded. As a result, throughput is increased because no aluminum welding is necessary.

Further illustrated is an outer jacket 130 that is formed from polyethylene and may encapsulate the conductor 120. For example, the outer jacket 130 may serve as an electrical insulating layer. The outer jacket 130 may be extruded over the conductor 120.

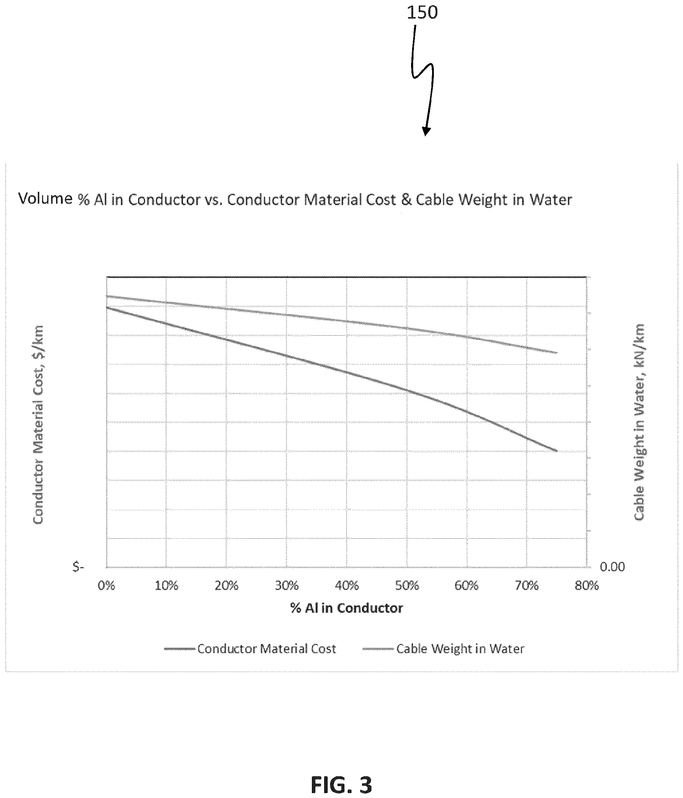

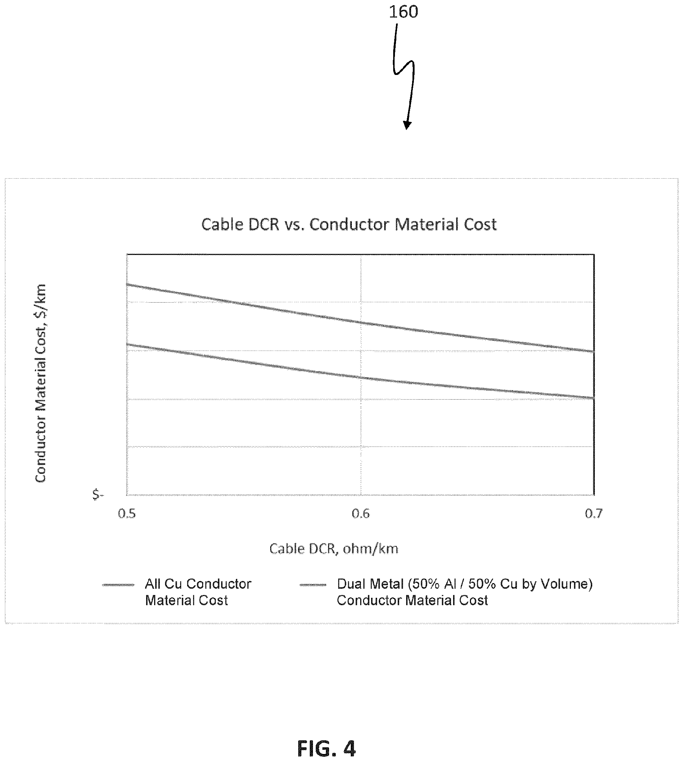

**FIG. 3** is a graph 150 illustrating conductor material volume percentage vs. conductor material cost and cable weight in water of the cables 102 according to embodiments of the present disclosure, while **FIG. 4** is a graph 160 illustrating cable Direct Current Resistance (DCR) vs. conductor material cost of the cables 102 according to embodiments of the present disclosure. It will be appreciated that specific monetary values are variable, and therefore not shown. **FIGs. 3 - 4** generally demonstrate example cost benefits of the dual metal conductor 120.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

The use of "including," "comprising," or "having" and variations thereof herein is meant to encompass the items listed thereafter and equivalents thereof as well as additional items. Accordingly, the terms "including," "comprising," or "having" and variations thereof are open-ended expressions and can be used interchangeably herein.

The phrases "at least one", "one or more", and "and/or", as used herein, are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

All directional references (e.g., proximal, distal, upper, lower, upward, downward, left, right, lateral, longitudinal, front, back, top, bottom, above, below, vertical, horizontal, radial, axial, clockwise, and counterclockwise) are only used for identification purposes to aid the reader's understanding of the present disclosure, and do not create limitations, particularly as to the position, orientation, or use of this disclosure. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

Furthermore, identification references (e.g., primary, secondary, first, second, third, fourth, etc.) are not intended to connote importance or priority, but are used to distinguish one feature from another. The drawings are for purposes of illustration only and the dimensions, positions, order and relative sizes reflected in the drawings attached hereto may vary.

The terms "substantial" or "substantially," as well as the terms "approximate" or "approximately," can be used interchangeably in some embodiments, and can be described using any relative measures acceptable by one of ordinary skill in the art. For example, these terms can serve as a comparison to a reference parameter, to indicate a deviation capable of providing the intended function. Although non-limiting, the deviation from the reference parameter can be, for example, in an amount of less than 1%, less than 3%, less than 5%, less than 10%, less than 15%, less than 20%, and so on.

Thus, such other embodiments and modifications are intended to fall within the scope of the present disclosure. Further, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth and spirit of the present disclosure as described herein.

## Claims

1. An optical cable comprising:
a hollow buffer tube having a plurality of optical fibers therein;
a first plurality of layered strength members surrounding the hollow buffer tube;
a conductor surrounding the first plurality of layered strength members, wherein the conductor comprises a first metal layer surrounded by a second metal layer; and
an outer insulating jacket surrounding the conductor.

2. The optical cable of claim 1, further comprising a second plurality of layered strength members surrounding the hollow buffer tube, wherein each of the first plurality of strength members has a first diameter, and wherein each of the second plurality of strength members has a second and third diameter, different than the first diameter.

3. The optical cable of claim 1, wherein the conductor is directly adjacent the outer jacket.

4. The optical cable of claim 1, wherein the first metal layer is aluminum, and wherein the second metal layer is copper.

5. The optical cable of claim 4, wherein the aluminum is an aluminum tape helically or longitudinally wrapped around the second plurality of layered strength members.

6. The optical cable of claim 4, wherein the copper is longitudinally wrapped along an exterior of the aluminum tape.

7. The optical cable of claim 4, wherein the copper is welded over the aluminum tape.

8. The optical cable of claim 1, wherein a first radial thickness of the first metal layer is greater than a second radial thickness of the second metal layer.

9. A method of forming an optical cable, comprising:
providing a hollow buffer tube around a plurality of optical fibers;
forming a first plurality of layered strength members around the hollow buffer tube;
forming a conductor around the first plurality of layered strength members, wherein the conductor comprises a first metal layer wrapped around the first plurality of layered strength members, and a second metal layer wrapped around the first metal layer; and
forming an insulative outer jacket around the conductor.

10. The method of claim 9, wherein forming the conductor comprises welding the second metal layer over the first metal layer, wherein the first metal layer is not welded, wherein the first metal layer is aluminum, and wherein the second metal layer is copper.

11. The method of claim 9, further comprising forming a second plurality of layered strength members around the first plurality of layered strength members.

12. The method of claim 11, wherein forming the conductor comprises helically or longitudinally wrapping the first metal layer and the second metal layer around the second plurality of layered strength members.
